# EUROPEAN PATENT APPLICATION

(11) **EP 4 703 415 A1**
(43) Date of publication of application: **04.03.2026**
(21) Application number: 24198136.4
(22) Date of filing: 03.09.2024
(51) Int. Cl.: C08J 11/06, B29B 17/00, B29B 17/04

(54) **RECYCLING OF SEMI-FINISHED POLYIMIDE PRODUCTS**

(71) Applicant: Ensinger Sintimed GmbH, 4863 Seewalchen (AT)
(72) Inventor: HOCHRAINER, Manuel, 4841 Ungenach (AT); KREMPLER, Andreas, 4863 Seewalchen (AT)
(74) Representative: Maiwald GmbH

(57) **Abstract**

The present invention relates to a process for recycling of at least one semi-finished polyimide product, a recycled semi-finished polyimide product obtainable by the process and an article comprising the recycled semi-finished polyimide product.

## Description

### TECHNICAL FIELD

The present invention relates to a process for recycling of at least one semi-finished polyimide product, a recycled semi-finished polyimide product obtainable by the process and an article comprising the recycled semi-finished polyimide product.

### BACKGROUND OF THE INVENTION

Polyimides (abbreviation PI) are plastics whose most important structural feature is the imide group. These include, among others: polysuccinimide (PSI), polybismaleimide (PBMI), polyimide sulfone (PISO) and polymethacrylimide (PMI). It is appreciated that polyimides are non-melting high temperature polymers. In particular, strength, dimensional stability, and creep resistance remain high even at temperatures above 260°C. Low wear rates combined with the ability to work under unlubricated conditions and high pV-rates makes it the ideal material for challenging friction and wear applications, extending lifetime and reducing maintenance costs. Polyimide applications can be found in many industries. High purity and low outgassing behavior are additional advantages for applications in the aerospace, vacuum and semiconductor industries.

Semi-finished polyimide products such as plates, rods or tubes are thus of great importance for the industries for preparing finished articles. Such semi-finished products based are typically produced from pure PI powders or mixtures of PI powders with functional fillers (e.g. graphite, molybdenum sulfide, carbon fibers, etc.) using a sintering process such as hot compression molding. This is also known as sintering plastics because the polyimides used are not meltable and very high temperatures are required for plastics to force the loose powder into a composite.

It is to be noted that finished articles made from semi-finished products only consist of 20, sometimes only 5 percent of the original semi-finished product. Thus, it is of great interest for the plastic industries to reuse or recycle the 80 to 95% of high-quality raw materials.

Approaches of reusing or recycling PI waste have long been known from the state of the art. In particular, the method of dissolving again or using it as a filler has been used so far. For example, the article "Solid-State Recycling of Polyimide Film Waste" in the "Journal of Applied Polymer Science" in February 2013 describes the grinding of PI film waste in ball mills into powders, which are then reused as fillers in tribological components. Utility model CN 218429380 U refers to a polyimide film waste recovery device, in which reprocessing (pulverization or conversion into a liquid polymer solution) is the central core of the invention.

However, these approaches have several drawbacks. For example, said processes are used for films, which polymer part can be dissolved in organic solvents. The sintering of polyimide however results in its insolubility in organic solvents. Thus, the afore-mentioned processes are not suitable for semi-finished polyimide products and its waste.

In view of the foregoing, there is still a need in the art for a process for recycling of polyimide products. More precisely, there is a need for a process for recycling of semi-finished polyimide products, especially by reusing the leftovers of semi-finished polyimide products.

Accordingly, it is an objective of the present invention to provide a process for recycling of semi-finished polyimide products. It is a further objective of the present invention to provide a process for recycling of semi-finished polyimide products by reusing the leftovers of semi-finished polyimide products. It is another objective of the present invention to provide a recycled semi-finished polyimide product obtainable by said process. It is still a further objective of the present invention to provide an article comprising the recycled semi-finished polyimide product.

These and other objectives of the present invention can be solved by the inventive process for recycling of at least one semi-finished polyimide product, a recycled semi-finished polyimide product obtainable by the process and an article comprising the recycled semi-finished polyimide product.

### SUMMARY OF THE INVENTION

According to one aspect of the present invention, a process for recycling of at least one semi-finished polyimide product is provided. The process comprising at least the steps of:
a) providing leftovers of at least one semi-finished polyimide product, and
b) processing the leftovers of the at least one semi-finished polyimide product by sintering at a temperature ranging from 250 to 550°C and/or a pressure ranging from 200 to 2.000 kg/cm² for producing a recycled semi-finished polyimide product.

A second aspect of the present invention relates to a recycled semi-finished polyimide product obtainable by the process defined herein.

A third aspect of the present invention relates to an article comprising the recycled semi-finished polyimide product as defined herein.

The inventors surprisingly found out that the process for recycling of at least one semi-finished polyimide product is useful for reusing leftovers of semi-finished polyimide products. Furthermore, the recycled semi-finished polyimide product obtainable by the process provides sufficient thermal properties and high mechanical resilience at high temperatures.

Advantageous embodiments of the present invention can be found in the corresponding dependent claims.

In one embodiment of any one of the aspects of the present invention, the leftovers of the at least one semi-finished polyimide product of step a) are obtained from mechanically shaping at least one semi-finished polyimide product.

In another embodiment of any one of the aspects of the present invention, the at least one semi-finished polyimide product is obtained in a sintering process, preferably a sintering process carried out at a temperature ranging from 250 to 550°C and/or a pressure ranging from 200 to 2.000 kg/cm².

In yet another embodiment of any one of the aspects of the present invention, the leftovers of the at least one semi-finished polyimide product of step a) are mixed with virgin polyimide.

In one embodiment of any one of the aspects of the present invention, the leftovers of the at least one semi-finished polyimide product of step a) essentially consist of polyimide.

In another embodiment of any one of the aspects of the present invention, the leftovers of the at least one semi-finished polyimide product of step a) comprise filler in an amount ranging from 5 to 80 wt.-%, based on the total weight of the leftovers of the at least one semi-finished polyimide product, and/or the leftovers of the at least one semi-finished polyimide product of step a) are mixed with filler such that the total amount of filler in the leftovers ranges from 5 to 80 wt.-%.

In yet another embodiment of any one of the aspects of the present invention, the leftovers of the at least one semi-finished polyimide product of step a) are milled before process step b).

In one embodiment of any one of the aspects of the present invention, the leftovers of the at least one semi-finished polyimide product of step a) have a median particle size *d*₅₀, as determined by laser diffraction, of ≤ 500 µm, preferably from 20 to 500 µm, and more preferably from 30 to 500 µm.

In another embodiment of any one of the aspects of the present invention, the sintering in process step b) is carried out by the same sintering process as used for obtaining the at least one semi-finished polyimide product.

In yet another embodiment of any one of the aspects of the present invention, the sintering in process step b) differs in temperature and/or pressure from the sintering process as used for obtaining the at least one semi-finished polyimide product.

In one embodiment of any one of the aspects of the present invention, the sintering in process step b) is carried out at a higher temperature and/or higher pressure, preferably higher pressure, as used in the sintering process for obtaining the at least one semi-finished polyimide product.

In another embodiment of any one of the aspects of the present invention, the sintering in process step b) and/or the sintering process for obtaining the at least one semi-finished polyimide product is carried out by direct forming, compression molding, isostatic pressing, hot compression molding and/or compacting.

In yet another embodiment of any one of the aspects of the present invention, the process comprises a further step c) of mechanically shaping the recycled semi-finished polyimide product into a recycled polyimide article obtaining thereby leftovers of the recycled semi-finished polyimide product which are subjected into process step a).

Where the term "comprising" is used in the present description and claims, it does not exclude other elements. For the purposes of the present invention, the term "consisting of" is considered to be a preferred embodiment of the term "comprising". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined hereinabove.

Terms like "obtainable" or "definable" and "obtained" or "defined" are used interchangeably. This, for example, means that, unless the context clearly dictates otherwise, the term "obtained" does not mean to indicate that, for example, an embodiment must be obtained by, for example, the sequence of steps following the term "obtained" though such a limited understanding is always included by the terms "obtained" or "defined" as a preferred embodiment

When in the following reference is made to embodiments or technical details of the inventive process, it is to be understood that these embodiments or technical details also refer to the recycled semi-finished polyimide product and the inventive article comprising the recycled semi-finished polyimide product.

### DETAILED DESCRIPTION OF THE INVENTION

The inventive process relates to the recycling of at least one semi-finished polyimide product. In particular, the process comprising at least the steps of:
a) providing leftovers of at least one semi-finished polyimide product, and
b) processing the leftovers of the at least one semi-finished polyimide product by sintering at a temperature ranging from 250 to 550°C and/or a pressure ranging from 200 to 2.000 kg/cm² for producing a recycled semi-finished polyimide product.

According to step a) of the process for recycling of at least one semi-finished polyimide product, leftovers of at least one semi-finished polyimide product are provided.

In the meaning of the present invention, "leftovers" refer to waste obtained from mechanically shaping at least one semi-finished polyimide product. Furthermore, the leftovers are considered as secondary raw material. For example, the leftovers may be any kind of material obtained by grinding, turning, drilling, sawing, milling, slotting, clearing and the like at least one semi-finished polyimide product. Thus, the leftover are preferably in the form of dust and chips.

It is appreciated that the term "at least one" semi-finished polyimide product means that the leftovers may be obtained from one or more semi-finished polyimide product(s).

Accordingly, it should be noted that the leftovers of the at least one semi-finished polyimide product may be obtained from one kind of semi-finished polyimide product. In this embodiment, the leftovers are one kind of leftovers of a semi-finished polyimide product. Alternatively, the leftovers of the at least one semi-finished polyimide product may be obtained from different kinds of semi-finished polyimide products. In this embodiment, the leftovers are a mixture of two or more kinds of leftovers of semi-finished polyimide products. For example, the leftovers of the at least one semi-finished polyimide product may be obtained from two or three different kinds of semi-finished polyimide products, like two kinds of semi-finished polyimide products. Thus, the leftovers are a mixture of two or three kinds of leftovers of semi-finished polyimide products, like two kinds of semi-finished polyimide products.

In one embodiment of the present invention, the leftovers are one kind of leftovers of a semi-finished polyimide product.

Thus, the leftovers of the at least one semi-finished polyimide product are considered as recyclable leftovers of the at least one semi-finished polyimide product.

In general, the polyimide used for preparing the at least one semi-finished polyimide product can be any polyimide considered suitable for the kind of products to be prepared. Thus, the polyimide is preferably non-meltable polyimide before being subjected into a sintering process. The term "non-meltable" means that the polyimide is non-meltable at high temperatures. Rather, the polyimide decomposes, i.e. before melting, at high temperatures, e.g. at temperatures of ≥ 550°C. More preferably, the polyimide is a non-meltable polyimide and essentially insoluble in organic solvents before being subjected into a sintering process. The term "essentially insoluble" means that the polyimide is insoluble in most of the organic solvents but may be poorly soluble in organic solvents such as dimethylformamide, n-methylpyrrolidone or dimetyhlacetamide. Such insoluble and non-meltable polyimides are well known to the skilled person and are distinguishable from other polyimides such as photosensitive polyimides, 3D printing polyimides, soluble polyimides for the preparation of foils as well as thermoplastic polyimides and extrudable polyimides.

The polyimide powders used for the production of semi-finished products are usually obtained by polymerizing for example tetracarboxylic acid dianhydrides and diamines or dianhydrides and diisocyanates produced in liquid reactors and subsequent pulverization (e.g. by drying, concentration of the organic solvent, precipitation, etc.). It is preferred that the polyimide powder is obtained by polymerizing tetracarboxylic acid dianhydrides and diamines.

Common dianhydrides for polymerization include: pyromellitic dianhydride, benzoquinone tetracarboxylic dianhydride and naphthalene tetracarboxylic dianhydride. Common diamines for polymerization are for example 4,4'-diaminodiphenyl ether ("DAPE"), 4,4'-diaminodiphenyl sulfone (dapsone), meta-phenylenediamine ("MDA") and 3,3-diaminodiphenylmethane. Common organic solvents for polymerization are dimethylformamide, n-methylpyrrolidone or dimetyhlacetamide.

It is appreciated that the molar ratio of tetracarboxylic acid dianhydrides to diamines or dianhydrides to diisocyanates preferably ranges from 9:1 to 1:9, preferably from 8:2 to 2:8 and most preferably from 6:4 to 4:6.

Specific examples include but are not limited to 1H,3H-benzo[1 ,2-c:4,5-c']difuran-1,3,5,7-tetrone, polymer with 5,5'-carbonylbis[1,3-isobenzofurandione] and 1,3-diisocyanatomethylbenzene; [5,5'-biisobenzofuran]-1,1',3,3'-tetrone, polymer with 4,4'-oxybis[benzenamine], and mixtures thereto.

It is to be noted that the polyimide powders are poorly soluble in organic solvents as for example mentioned above, but the polyimide material completely loses its solubility as a result of sintering. Thus, the leftovers of the at least one semi-finished polyimide product are insoluble in organic solvents, e.g. dimethylformamide, n-methylpyrrolidone or dimetyhlacetamide, after sintering and non-meltable.

It is appreciated that the leftovers of the at least one semi-finished polyimide product of step a) are obtained from mechanically shaping at least one semi-finished polyimide product.

Thus, the leftovers of the at least one semi-finished polyimide product of step a) are preferably obtained from grinding, turning, drilling, sawing, milling, slotting, clearing and the like of at least one semi-finished polyimide product. That is to say, the leftovers of the at least one semi-finished polyimide product are obtained by any kind of mechanical machining used for shaping semi-finished polyimide products.

Thus, the leftovers of the at least one semi-finished polyimide product are preferably in the form of chips, e.g. turning chips, or dust, e.g. grinding dust.

As the leftovers are obtained from at least one semi-finished polyimide product, the at least one semi-finished polyimide product is obtained in a sintering process. Such sintering processes used for preparing semi-finished polyimide products are well known to the skilled person. Thus, the sintering process for obtaining the at least one semi-finished polyimide product is preferably carried out by direct forming, compression molding, isostatic pressing, hot compression molding and/or compacting.

It is however preferred that the sintering process is carried out at a temperature ranging from 250 to 550°C and/or a pressure ranging from 200 to 2.000 kg/cm². For example, the sintering process is carried out at a temperature ranging from 250 to 550°C or a pressure ranging from 200 to 2.000 kg/cm². Alternatively, the sintering process is carried out at a temperature ranging from 250 to 550°C and a pressure ranging from 200 to 2.000 kg/cm².

In one embodiment, the sintering process is carried out at a temperature ranging from 350 to 450°C and/or a pressure ranging from 200 to 2.000 kg/cm². For example, the sintering process is carried out at a temperature ranging from 350 to 450°C or a pressure ranging from 200 to 2.000 kg/cm². Alternatively, the sintering process is carried out at a temperature ranging from 350 to 450°C and a pressure ranging from 200 to 2.000 kg/cm².

In view of this, the leftovers of at least one semi-finished polyimide product of step a) are preferably obtained in a process comprising the steps of:
i) sintering a polyimide material into a semi-finished polyimide product, and
ii) mechanically shaping the semi-finished polyimide product into a polyimide article obtaining thereby leftovers of the semi-finished polyimide product.

It is appreciated that steps i) and ii) can be carried out in separate steps or simultaneously in one step.

In one embodiment, the process for recycling of at least one semi-finished polyimide product thus comprises at least the steps of:
i) sintering a polyimide material into a semi-finished polyimide product,
ii) mechanically shaping the semi-finished polyimide product into a polyimide article obtaining thereby leftovers of the semi-finished polyimide product,
   a) providing the leftovers of the at least one semi-finished polyimide product, and
   b) processing the leftovers of the at least one semi-finished polyimide product by sintering at a temperature ranging from 250 to 550°C and/or a pressure ranging from 200 to 2.000 kg/cm² for producing a recycled semi-finished polyimide product.

It is to be noted that the leftovers of at least one semi-finished polyimide product provided in step a) preferably have a specific particle size. In particular, it has been found out that the leftovers provided in step a) preferably have a median particle size *d*₅₀, as determined by laser diffraction, of ≤ 500 µm. For example, the leftovers of the at least one semi-finished polyimide product provided in step a) have a median particle size *d*₅₀, as determined by laser diffraction, of from 20 to 500 µm, and more preferably from 30 to 500 µm.

The leftovers of at least one semi-finished polyimide product are obtained from mechanically shaping a semi-finished polyimide product into a polyimide article and thus the leftovers can already have the advantageous median particle size *d*₅₀, as determined by laser diffraction, of ≤ 500 µm, preferably from 20 to 500 µm, and more preferably from 30 to 500 µm.

If the leftovers of the at least one semi-finished polyimide product do not have said median particle size, it is possible to subject the leftovers to a step of milling in order to reduce the particle size to a median particle size *d*₅₀, as determined by laser diffraction, of ≤ 500 µm, preferably from 20 to 500 µm, and more preferably from 30 to 500 µm.

Thus, the process for recycling of at least one semi-finished polyimide product of the present invention preferably comprises a step in which the leftovers of the at least one semi-finished polyimide product of step a) are milled before process step b).

In this embodiment, the process for recycling of at least one semi-finished polyimide product of the present invention thus comprises at least the steps of:
a) providing leftovers of at least one semi-finished polyimide product,
a1) milling the leftovers of the at least one semi-finished polyimide product of step a) before process step b), and
b) processing the leftovers of the at least one semi-finished polyimide product by sintering at a temperature ranging from 250 to 550°C and/or a pressure ranging from 200 to 2.000 kg/cm² for producing a recycled semi-finished polyimide product.

It is appreciated that this process may further include steps of obtaining leftovers of the semi-finished polyimide product by sintering of a polyimide material into a semi-finished polyimide product, and mechanically shaping the polyimide semi-finished product into a polyimide article as described above.

In this embodiment, the process for recycling of at least one semi-finished polyimide product thus comprises at least the steps of:
i) sintering a polyimide material into a semi-finished polyimide product,
ii) mechanically shaping the semi-finished polyimide product into a polyimide article obtaining thereby leftovers of the semi-finished polyimide product,
   a) providing the leftovers of the at least one semi-finished polyimide product,
   a1) milling the leftovers of the at least one semi-finished polyimide product of step a) before process step b), and
   b) processing the leftovers of the at least one semi-finished polyimide product by sintering at a temperature ranging from 250 to 550°C and/or a pressure ranging from 200 to 2.000 kg/cm² for producing a recycled semi-finished polyimide product.

Depending on the mechanical and/or thermal needs of the recycled polyimide product obtained, the leftovers of the at least one semi-finished polyimide product can be used alone or together with virgin polyimide.

Thus, in one embodiment, the leftovers of the at least one semi-finished polyimide product can be used alone. Thus, it is appreciated that the leftovers are used as they are, i.e. they are not mixed with virgin polyimide.

In another embodiment, the leftovers of the at least one semi-finished polyimide product are used together with virgin polyimide. Thus, it is appreciated that the leftover of the at least one semi-finished polyimide product of step a) are mixed with virgin polyimide such that a mixture of the leftovers and virgin polyimide is obtained.

If the leftovers of the at least one semi-finished polyimide product of step a) are mixed with virgin polyimide, the virgin polyimide can be the same polyimide as used for preparing the at least one semi-finished polyimide product. Alternatively, the virgin polyimide can be different to the polyimide as used for preparing the at least one semi-finished polyimide product.

If virgin polyimide is mixed with the leftovers, the weight ratio between leftovers and virgin polymer [leftovers/virgin polymer] is preferably from 50:50 to 99:1, more preferably from 60:40 to 95:5 and most preferably from 70:30 to 90:10.

It is to be noted that the virgin polyimide is preferably added before step b) is carried out. If the process comprises optional step a1), i.e. milling the leftovers of the at least one semi-finished polyimide product of step a) before process step b), it is preferred that the virgin polyimide is added after step a1) and before step b).

Preferably, the leftovers of the at least one semi-finished polyimide product essentially consist of polyimide. That is to say, the leftovers of the at least one semi-finished polyimide product comprise ≥ 98.0 wt.-%, preferably 98.0 to 100 wt.-%, more preferably 99.0 to 100 wt.-%, based on the total weight of the leftovers, of polyimide. The remaining part may be made up of typical additives used for preparing the products to be prepared or impurities resulting from the sintering or shaping process.

In one embodiment, the leftovers of the at least one semi-finished polyimide product consist of polyimide.

Alternatively, the polymeric part of the leftovers consists of polyimide.

It is appreciated that the leftovers of the at least one semi-finished polyimide product may comprise filler, e.g. functional filler, typically included in the products to be prepared. For example, the leftovers of the at least one semi-finished polyimide product comprise filler, e.g. functional filler, in an amount ranging from 5 to 80 wt.-%, preferably from 7.5 to 50 wt.-%, based on the total weight of the leftovers of the at least one semi-finished polyimide product.

Typical fillers, e.g. functional filler, are selected from the group comprising, preferably consisting of, graphite, glass fiber, carbon fiber, polytetrafluoroethylene (PTFE), molybdenum sulfide and mixtures thereof.

The fillers present in the leftovers of the at least one semi-finished polyimide product preferably have a median particle size d₅₀ of ≤ 300 µm, e.g. from 0.1 to 300 µm.

It is to be noted that the amount of filler in the leftovers of the at least one semi-finished polyimide product depends on the filler used. For example, the leftovers of the at least one semi-finished polyimide product comprise graphite typically in an amount ranging from 5 to 50 wt.-%, preferably from 20 to 50 wt.-%, more preferably from 30 to 50 wt.-% and most preferably from 35 to 45 wt.-%, based on the total weight of the leftovers of the at least one semi-finished polyimide product. If the leftovers of the at least one semi-finished polyimide product comprise glass fibers, the amount of glass fibers in the leftovers typically ranges from 5 to 50 wt.-%, preferably from 10 to 45 wt.-%, more preferably from 20 to 40 wt.-% and most preferably from 25 to 35 wt.-%, based on the total weight of the leftovers of the at least one semi-finished polyimide product. If the leftovers of the at least one semi-finished polyimide product comprise carbon fibers, the amount of carbon fibers in the leftovers typically ranges from 5 to 50 wt.-%, preferably from 10 to 45 wt.-%, more preferably from 20 to 40 wt.-% and most preferably from 25 to 35 wt.-%, based on the total weight of the leftovers of the at least one semi-finished polyimide product. If the leftovers of the at least one semi-finished polyimide product comprise polytetrafluoroethylene (PTFE), the amount of polytetrafluoroethylene (PTFE) in the leftovers typically ranges from 5 to 80 wt.-%, preferably from 5 to 70 wt.-%, more preferably from 5 to 50 wt.-% and most preferably from 5 to 25 wt.-%, based on the total weight of the leftovers of the at least one semi-finished polyimide product. If the leftovers of the at least one semi-finished polyimide product comprise molybdenum sulfide, the amount of molybdenum sulfide in the leftovers typically ranges from 5 to 50 wt.-%, preferably from 5 to 40 wt.-%, more preferably from 5 to 30 wt.-% and most preferably from 10 to 20 wt.-%, based on the total weight of the leftovers of the at least one semi-finished polyimide product.

Additionally or alternatively, the leftovers of the at least one semi-finished polyimide product of step a) are mixed with (fresh) filler such that the total amount of filler in the leftovers ranges from 5 to 80 wt.-%. That is to say, the amount of filler, e.g. functional filler, in the leftovers of the at least one semi-finished polyimide product may be below the desired amount of filler such that the desired final amount is adjusted by adding fresh filler, e.g. functional filler. As regards the filler, it is referred to the information provided above for the filler that may be present in the leftovers of the at least one semi-finished polyimide product of step a).

If the leftovers of the at least one semi-finished polyimide product of step a) comprise filler, e.g. functional filler, it is preferred that the polymeric part of the leftovers consists of polyimide. That is to say, the leftovers of the at least one semi-finished polyimide product of step a) preferably consist of filler, e.g. functional filler, and polyimide.

It is to be noted that the filler, e.g. functional filler, is preferably added before step b) is carried out. If the process comprises optional step a1), i.e. milling the leftovers of the at least one semi-finished polyimide product of step a) before process step b), it is preferred that the filler, e.g. functional filler, is added after step a1) and before step b).

According to step b) of the process for recycling of at least one semi-finished polyimide product, the leftovers of the at least one semi-finished polyimide product are processed by sintering at a temperature ranging from 250 to 550°C and/or a pressure ranging from 200 to 2.000 kg/cm² for producing a recycled semi-finished polyimide product.

Such sintering processes used for preparing semi-finished polyimide products are well known to the skilled person.

It is preferred that the sintering process in step b) is carried out at a temperature ranging from 250 to 550°C and/or a pressure ranging from 200 to 2.000 kg/cm². For example, the sintering process in step b) is carried out at a temperature ranging from 250 to 550°C or a pressure ranging from 200 to 2.000 kg/cm². Alternatively, the sintering process in step b) is carried out at a temperature ranging from 250 to 550°C and a pressure ranging from 200 to 2.000 kg/cm².

In one embodiment, the sintering process in step b) is carried out at a temperature ranging from 350 to 450°C and/or a pressure ranging from 200 to 2.000 kg/cm². For example, the sintering process in step b) is carried out at a temperature ranging from 350 to 450°C or a pressure ranging from 200 to 2.000 kg/cm². Alternatively, the sintering process in step b) is carried out at a temperature ranging from 350 to 450°C and a pressure ranging from 200 to 2.000 kg/cm².

As already noted above, the at least one semi-finished polyimide product from which the leftovers are obtained is obtained in a sintering process.

In one embodiment, the sintering in process step b) is carried out by the same sintering process as used for obtaining the at least one semi-finished polyimide product, i.e. step i). That is to say, the sintering in process step b) and the sintering process as used for obtaining the at least one semi-finished polyimide product, i.e. step i), is carried out in a sintering process using the same temperature and/or pressure, preferably the same temperature and pressure.

The wording "same" with respect to the sintering processes means that the temperature in both processes differ by ± 10°C at most and/or the pressure differs in both processes by ± 50 kg/cm² at most.

Alternatively, the sintering in process step b) is carried out by a different sintering process as used for obtaining the at least one semi-finished polyimide product, i.e. step i). That is to say, the sintering in process step b) and the sintering process as used for obtaining the at least one semi-finished polyimide product, i.e. step i), is carried out in a sintering process using different temperatures and/or pressures, preferably different temperatures or pressures.

The wording "differ" or "different" with respect to the sintering processes means that the temperature in both processes differ by at least ± 20°C and/or the pressure differs in both processes by at least ± 100 kg/cm². Thus, the sintering in process step b) can be carried out at a higher or lower temperature and/or higher or lower pressure as used in the sintering process for obtaining the at least one semi-finished polyimide product, i.e. step i).

In one embodiment, the sintering in process step b) is carried out at a higher temperature and/or higher pressure as used in the sintering process for obtaining the at least one semi-finished polyimide product, i.e. step i). For example, the sintering in process step b) is carried out at a higher temperature or higher pressure as used in the sintering process for obtaining the at least one semi-finished polyimide product, i.e. step i). Alternatively, the sintering in process step b) is carried out at a higher temperature and higher pressure as used in the sintering process for obtaining the at least one semi-finished polyimide product, i.e. step i).

In another embodiment, sintering in process step b) is carried out at a lower temperature and/or lower pressure as used in the sintering process for obtaining the at least one semi-finished polyimide product, i.e. step i). For example, the sintering in process step b) is carried out at a lower temperature or lower pressure as used in the sintering process for obtaining the at least one semi-finished polyimide product, i.e. step i). Alternatively, the sintering in process step b) is carried out at a lower temperature and lower pressure as used in the sintering process for obtaining the at least one semi-finished polyimide product, i.e. step i).

In a preferred embodiment, the sintering in process step b) is carried out at a higher pressure as used in the sintering process for obtaining the at least one semi-finished polyimide product, i.e. step i). In particular, the sintering in process step b) is carried out at a pressure that is at least 100 kg/cm², preferably at least 200 kg/cm², more preferably at least 300 kg/cm², e.g. from 100 to 500 kg/cm² or from 200 to 500 kg/cm² or from 300 to 500 kg/cm², above the pressure as used in the sintering process for obtaining the at least one semi-finished polyimide product, i.e. step i).

Additionally or alternatively, the sintering in process step b) is carried out at a higher temperature as used in the sintering process for obtaining the at least one semi-finished polyimide product, i.e. step i). In particular, the sintering in process step b) is carried out at a temperature that is at least 20°C, preferably at least 30°C, more preferably at least 60°C, e.g. from 20 to 200°C or from 30 to 150°C or from 60 to 100°C, above the temperature as used in the sintering process for obtaining the at least one semi-finished polyimide product, i.e. step i).

If the sintering in process step b) is carried out at a lower pressure as used in the sintering process for obtaining the at least one semi-finished polyimide product, i.e. step i), the sintering in process step b) is carried out at a pressure that is at least 100 kg/cm², preferably at least 200 kg/cm², more preferably at least 300 kg/cm², e.g. from 100 to 500 kg/cm² or from 200 to 500 kg/cm² or from 300 to 500 kg/cm², below the pressure as used in the sintering process for obtaining the at least one semi-finished polyimide product, i.e. step i).

Additionally or alternatively, the sintering in process step b) is carried out at a lower temperature as used in the sintering process for obtaining the at least one semi-finished polyimide product, i.e. step i). In particular, the sintering in process step b) is carried out at a temperature that is at least 20°C, preferably at least 30°C, more preferably at least 60°C, e.g. from 20 to 200°C or from 30 to 150°C or from 60 to 100°C, below the temperature as used in the sintering process for obtaining the at least one semi-finished polyimide product, i.e. step i).

The sintering in process step b) is preferably carried out by direct forming, compression molding, isostatic pressing, hot compression molding and/or compacting. Preferably, the sintering in process step b) is carried out by hot compression molding.

It is to be noted that the sintering in process step b) and the sintering process for obtaining the at least one semi-finished polyimide product, i.e. step i), can be the same or different. Thus, the sintering in process step b) and the sintering process for obtaining the at least one semi-finished polyimide product, i.e. step i), are carried out by the same process selected from direct forming, compression molding, isostatic pressing, hot compression molding and compacting. Alternatively, the sintering in process step b) and the sintering process for obtaining the at least one semi-finished polyimide product, i.e. step i), are carried out by a different process selected from direct forming, compression molding, isostatic pressing, hot compression molding and compacting.

For example, if the sintering in process step b) is carried out by direct forming, the sintering process for obtaining the at least one semi-finished polyimide product, i.e. step i), is carried out by a process selected from compression molding, isostatic pressing, hot compression molding and compacting.

In a preferred embodiment, the sintering in process step b) and the sintering process for obtaining the at least one semi-finished polyimide product, i.e. step i), are carried out by the same process selected from direct forming, compression molding, isostatic pressing, hot compression molding and compacting. For example, the sintering in process step b) and the sintering process for obtaining the at least one semi-finished polyimide product, i.e. step i), are carried out by hot compression molding.

In one embodiment, the leftovers of the at least one semi-finished polyimide product can be dried before being subjected into process step b). For example, the drying is carried out at a temperature ranging from 90 to 400°C. The drying is preferably carried out for at least 6 h and more preferably for 6 to 36 h. It is appreciated that the drying can be carried out under vacuum and/or protective atmosphere, e.g. nitrogen. In one embodiment, the drying is carried out under vacuum and protective atmosphere, e.g. nitrogen. Alternatively, the drying is carried out under vacuum or protective atmosphere, e.g. nitrogen.

The process may include a further step c) of mechanically shaping the recycled semi-finished polyimide product into a recycled polyimide article obtaining thereby leftovers of the recycled semi-finished polyimide product. Thus, the recycled semi-finished polyimide product is mechanically shaped into a recycled polyimide article.

Thus, the recycled polyimide article of step c) is preferably obtained by a method selected from the group comprising, more preferably consisting of, grinding, turning, drilling, sawing, milling, slotting, clearing and the like of the recycled semi-finished polyimide product obtained in step b). That is to say, the recycled polyimide article of step c) is obtained by any kind of mechanical machining used for shaping semi-finished polyimide products.

It is to be noted that the mechanically shaping in process stap c) results in leftovers of the recycled semi-finished polyimide product, which may be again subjected to process step a).

Thus, in a preferred embodiment, the process comprises step c) of mechanically shaping the recycled semi-finished polyimide product into a recycled polyimide article obtaining thereby leftovers of the recycled semi-finished polyimide product which are subjected into process step a), i.e. process steps a) to b), of the process for recycling of at least one semi-finished polyimide product.

In this embodiment, the process for recycling of at least one semi-finished polyimide product of the present invention thus comprises at least the steps of:
a) providing leftovers of at least one semi-finished polyimide product,
b) processing the leftovers of the at least one semi-finished polyimide product by sintering at a temperature ranging from 250 to 550°C and/or a pressure ranging from 200 to 2.000 kg/cm² for producing a recycled semi-finished polyimide product, and
c) mechanically shaping the recycled semi-finished polyimide product into a recycled polyimide article obtaining thereby leftovers of the recycled semi-finished polyimide product which are subjected into process step a), i.e. process steps a) to b), of the process.

It is appreciated that the process for recycling of at least one semi-finished polyimide product of the present invention comprising steps a) and b), and optionally step c), can be repeated once or several times. For example, the process for recycling of at least one semi-finished polyimide product of the present invention comprising steps a) to b), and optionally step c), is repeated once. That is to say, the process for recycling of at least one semi-finished polyimide product of the present invention comprises steps a) to c), and further steps a) to b) obtaining thereby a recycled semi-finished polyimide product that has been recycled twice.

Alternatively, the process for recycling of at least one semi-finished polyimide product of the present invention comprising steps a) to c) is repeated twice or three times. That is to say, the process for recycling of at least one semi-finished polyimide product of the present invention comprises two or three cycles of steps a) to c), and further steps a) to b) obtaining thereby a recycled semi-finished polyimide product that has been recycled three or four times.

However, the process for recycling of at least one semi-finished polyimide product of the present invention comprising steps a) to c) can be also repeated more than three times, e.g. four to ten times.

This embodiment may further include a step of milling the leftovers of the at least one semi-finished polyimide product of step a) before process step b) as described above.

In this embodiment, the process for recycling of at least one semi-finished polyimide product thus comprises at least the steps of:
a) providing leftovers of at least one semi-finished polyimide product,
a1) milling the leftovers of the at least one semi-finished polyimide product of step a) before process step b),
b) processing the leftovers of the at least one semi-finished polyimide product by sintering at a temperature ranging from 250 to 550°C and/or a pressure ranging from 200 to 2.000 kg/cm² for producing a recycled semi-finished polyimide product, and
c) mechanically shaping the recycled semi-finished polyimide product into a recycled polyimide article obtaining thereby leftovers of the recycled semi-finished polyimide product which are subjected into process step a), i.e. process steps a) to b), of the process.

In a second aspect of the present invention, a recycled semi-finished polyimide product is provided. The recycled semi-finished polyimide product is obtainable by the process for recycling of at least one semi-finished polyimide product as defined herein.

With regard to the definition of the process for recycling of at least one semi-finished polyimide product and preferred embodiments thereof, reference is made to the statements provided above when discussing the technical details of the process.

Thus, the recycled semi-finished polyimide product is obtained by a process for recycling of at least one semi-finished polyimide product, the process comprising at least the steps of:
a) providing leftovers of at least one semi-finished polyimide product, and
b) processing the leftovers of the at least one semi-finished polyimide product by sintering at a temperature ranging from 250 to 550°C and/or a pressure ranging from 200 to 2.000 kg/cm² for producing a recycled semi-finished polyimide product.

Alternatively, the recycled semi-finished polyimide product is obtained by a process for recycling of at least one semi-finished polyimide product, the process comprising at least the steps of:
a) providing leftovers of at least one semi-finished polyimide product,
a1) milling the leftovers of the at least one semi-finished polyimide product of step a) before process step b), and
b) processing the leftovers of the at least one semi-finished polyimide product by sintering at a temperature ranging from 250 to 550°C and/or a pressure ranging from 200 to 2.000 kg/cm² for producing a recycled semi-finished polyimide product.

Alternatively, the recycled semi-finished polyimide product is obtained by a process for recycling of at least one semi-finished polyimide product, the process comprising at least the steps of:
i) sintering a polyimide material into a semi-finished polyimide product,
ii) mechanically shaping the semi-finished polyimide product into a polyimide article obtaining thereby leftovers of the semi-finished polyimide product,
   a) providing the leftovers of at least one semi-finished polyimide product, and
   b) processing the leftovers of the at least one semi-finished polyimide product by sintering at a temperature ranging from 250 to 550°C and/or a pressure ranging from 200 to 2.000 kg/cm² for producing a recycled semi-finished polyimide product.

Alternatively, the recycled semi-finished polyimide product is obtained by a process for recycling of at least one semi-finished polyimide product, the process comprising at least the steps of:
i) sintering a polyimide material into a semi-finished polyimide product,
ii) mechanically shaping the semi-finished polyimide product into a polyimide article obtaining thereby leftovers of the semi-finished polyimide product,
   a) providing the leftovers of at least one semi-finished polyimide product,
   a1) milling the leftovers of the at least one semi-finished polyimide product of step a) before process step b), and
   b) processing the leftovers of the at least one semi-finished polyimide product by sintering at a temperature ranging from 250 to 550°C and/or a pressure ranging from 200 to 2.000 kg/cm² for producing a recycled semi-finished polyimide product.

Alternatively, the recycled semi-finished polyimide product is obtained by a process for recycling of at least one semi-finished polyimide product, the process comprising at least the steps of:
a) providing leftovers of at least one semi-finished polyimide product,
b) processing the leftovers of the at least one semi-finished polyimide product by sintering at a temperature ranging from 250 to 550°C and/or a pressure ranging from 200 to 2.000 kg/cm² for producing a recycled semi-finished polyimide product, and
c) mechanically shaping the recycled semi-finished polyimide product into a recycled polyimide article obtaining thereby leftovers of the recycled semi-finished polyimide product which are subjected into process step a), i.e. process steps a) to b), of the process.

Alternatively, the recycled semi-finished polyimide product is obtained by a process for recycling of at least one semi-finished polyimide product, the process comprising at least the steps of:
a) providing leftovers of at least one semi-finished polyimide product,
a1) milling the leftovers of the at least one semi-finished polyimide product of step a) before process step b),
b) processing the leftovers of the at least one semi-finished polyimide product by sintering at a temperature ranging from 250 to 550°C and/or a pressure ranging from 200 to 2.000 kg/cm² for producing a recycled semi-finished polyimide product, and
c) mechanically shaping the recycled semi-finished polyimide product into a recycled polyimide article obtaining thereby leftovers of the recycled semi-finished polyimide product which are subjected into process step a), i.e. process steps a) to b), of the process.

In view of the very good results achieved for the present process the present invention refers in another aspect to an article comprising the recycled semi-finished polyimide product.

Articles are for example heat shields, cable lead-throughs or sensor holders.

With regard to the definition of the recycled semi-finished polyimide product, the process for recycling of at least one semi-finished polyimide product and preferred embodiments thereof, reference is made to the statements provided above when discussing the technical details of the process.

### BRIEF DESCRIPTION OF THE FIGURES

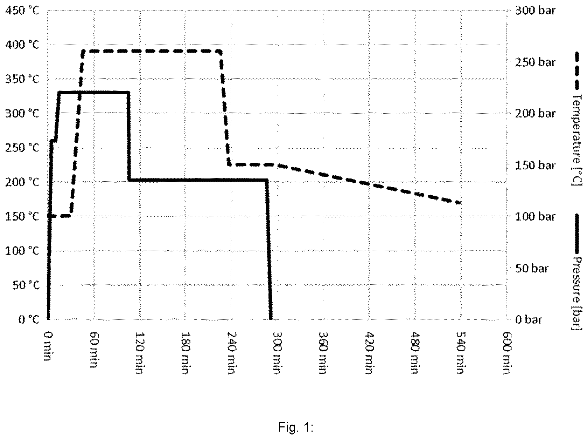

Fig. 1 shows the temperature and pressure profile for the sintering process.
The scope and interest of the invention will be better understood based on the following examples which are intended to illustrate certain embodiments of the present invention and are non-limitative.

### EXAMPLES

### Methods

In the following, measurement methods implemented in the examples are described.

### Median particle size d50

The median particle size *d*₅₀ as described herein refers to the volume determined median particle size *d*₅₀(vol) and was evaluated using a Helos instrument from Sympatec, Germany, in accordance with the manufacturer's instructions. The *d*₅₀(vol) value indicates a diameter value such that 50 % by volume, respectively, of the particles have a diameter below this value and 50 % by volume, respectively, of the particles have a diameter above this value.

### Mechanical properties

The mechanical properties such as tensile strength and bending strength were determined according to EN ISO 527-1 and EN ISO 178.

### Samples used

The following types of leftovers of semi-finished polyimide products were used:

### Sample 1

1H,3H-Benzo[1,2-c:4,5-c']difuran-1,3,5,7-tetrone, polymer with 5,5'-carbonylbis[1,3-isobenzofurandione] and 1,3-diisocyanatomethylbenzene; chips having a size of 5 x 5 x 0,4 mm.

### Sample 2

Sample 1 comprising 15 wt.-%, based on the total weight of the product, of graphite powder having a d50 of ≤ 100 µm.

### Sample 3

spirals having a length of 4 to 15 cm, a width of 1 to 3 mm and a thickness of 0,4 mm.

### Sample 4

Sample 3 comprising 15 wt.-%, based on the total weight of the product, of graphite powder having a d50 of ≤ 100 µm.

### Sample 5

[5,5'-Biisobenzofuran]-1,1',3,3'-tetrone, polymer with 4,4'-oxybis[benzenamine], needle-like powder.

### Experiments

The samples used had a median particle size *d*₅₀, as determined by laser diffraction, of from 30 to 500 µm or were milled to a median particle size *d*₅₀, as determined by laser diffraction, of from 30 to 500 µm. Before sintering, the samples were dried in an oven for 12h at 250°C.

The process parameters as set out in the following tables 1 and 2 were used for sintering the samples into recycled semi-finished polyimide products by hot compression molding:

**Table 1**

| | Hydraulic Press | Cylinder Ø260 mm | Standard Program |
|---|---|---|---|
| Releasing agent | Cylinder height | | Program time: |
| | ∼ 10 mm | | 540 min |

**Table 2**

| SET | DURATION | | MOLD ZONE 1 | | HP-UPPER ZONE 2 | | HP-LOWER ZONE 3 | |
|---|---|---|---|---|---|---|---|---|
| # | [min] | [sek] | [°C] | [°C/min] | [°C] | [°C/min] | [°C] | [°C/min] |
| | | | | | | | 1 | |
| 00 | 1 | 00 | 150 | 15 | 150 | 25 | 150 | 15 |
| 01 | 30 | 00 | 150 | 15 | 150 | 25 | 150 | 15 |
| 02 | 16 | 00 | 390 | 15 | 390 | 25 | 390 | 15 |
| 03 | 180 | 00 | 390 | 15 | 390 | 25 | 390 | 15 |
| 04 | 11 | 00 | 225 | 15 | 225 | 25 | 225 | 15 |
| 05 | 60 | 00 | 225 | 15 | 225 | 25 | 225 | 15 |
| 06 | 240 | 00 | 170 | 15 | 170 | 25 | 1700 | 15 |

The temperature and pressure profile for the sintering process can be gathered from Fig. 1.

The change in mechanical properties of the obtained recycled semi-finished polyimide products in terms of tensile strength based on the average value of the internal specification of the original semi-finished polyimide products are set out in the following table 3.

**Table 3**

| | |
|---|---|
| Sample 1 | Reduction of about ∼35% |
| Sample 1 | Reduction of about ∼49% |

The change in mechanical properties of the obtained recycled semi-finished polyimide products in terms of bending strength based on the average value of the internal specification of the original semi-finished polyimide products are set out in the following table 4.

**Table 4**

| | |
|---|---|
| Sample 1 | Reduction of about ~30% |
| Sample 3 | Reduction of about ~42% |
| Sample 5 | Reduction of about ∼53% |

Recycled semi-finished polyimide products were also prepared from leftovers comprising 15 wt.-% of graphite. The change in mechanical properties of the obtained recycled semi-finished polyimide products in terms of bending strength and tensile strength based on the average value of the internal specification of the semi-finished polyimide products are set out in the following table 5.

**Table 5**

| | |
|---|---|
| Sample 2 tensile strength | Reduction of about ∼80% |
| Sample 2 bending strength | Reduction of about ∼73% |
| Sample 4 tensile strength | Reduction of about ∼77% |
| Sample 4 bending strength | Reduction of about ∼66% |

It is to be noted that all the above recycled semi-finished polyimide products maintain their thermal properties, such as thermal resilience, compared to the average value of the internal specification of the semi-finished polyimide products.

Thus, if the thermal properties, such as thermal resilience, as well as a lower price are more relevant than mechanical properties, it is possible to use recycled semi-finished polyimide products as prepared by the process described herein for polyimide articles. Such articles may be e.g. heat shields, cable lead-throughs or sensor holders.

### Re-Recycling

The chips collected by preparing the above recycled semi-finished polyimide products were crushed using a rotor mill and returned to powder form. The obtained powder of Sample 1 had a median particle size *d*₅₀ of about 191 µm. The obtained powder of Sample 5 had a median particle size *d*₅₀ of about 117 µm. Similar to the experiments above (see tables 1 and 2), these powders were sintered again into recycled semi-finished polyimide products by using the same process parameters in hot compression molding. Before sintering, the powders were dried in an oven for 24h at 150°C.

The results are comparable to the results set out in tables 3 to 5 above.

## Claims

1. Process for recycling of at least one semi-finished polyimide product, the process comprising at least the steps of:
a) providing leftovers of at least one semi-finished polyimide product, and
b) processing the leftovers of the at least one semi-finished polyimide product by sintering at a temperature ranging from 250 to 550°C and/or a pressure ranging from 200 to 2.000 kg/cm² for producing a recycled semi-finished polyimide product.

2. The process according to claim 1, wherein the leftovers of the at least one semi-finished polyimide product of step a) are obtained from mechanically shaping at least one semi-finished polyimide product.

3. The process according to claim 2, wherein the at least one semi-finished polyimide product is obtained in a sintering process, preferably a sintering process carried out at a temperature ranging from 250 to 550°C and/or a pressure ranging from 200 to 2.000 kg/cm².

4. The process according to any one of claims 1 to 3, wherein the leftovers of the at least one semi-finished polyimide product of step a) are mixed with virgin polyimide.

5. The process according to any one of claims 1 to 4, wherein the leftovers of the at least one semi-finished polyimide product of step a) essentially consist of polyimide.

6. The process according to any one of claims 1 to 4, wherein the leftovers of the at least one semi-finished polyimide product of step a) comprise filler in an amount ranging from 5 to 80 wt.-%, based on the total weight of the leftovers of the at least one semi-finished polyimide product, and/or the leftovers of the at least one semi-finished polyimide product of step a) are mixed with filler such that the total amount of filler in the leftovers ranges from 5 to 80 wt.-%.

7. The process according to any one of claims 1 to 6, wherein the leftovers of the at least one semi-finished polyimide product of step a) are milled before process step b).

8. The process according to any one of claims 1 to 7, wherein the leftovers of the at least one semi-finished polyimide product of step a) have a median particle size *d*₅₀, as determined by laser diffraction, of ≤ 500 µm, preferably from 20 to 500 µm, and more preferably from 30 to 500 µm.

9. The process according to any one of claims 3 to 8, wherein the sintering in process step b) is carried out by the same sintering process as used for obtaining the at least one semi-finished polyimide product.

10. The process according to any one of claims 3 to 9, wherein the sintering in process step b) differs in temperature and/or pressure from the sintering process as used for obtaining the at least one semi-finished polyimide product.

11. The process according to claim 10, wherein the sintering in process step b) is carried out at a higher temperature and/or higher pressure, preferably higher pressure, as used in the sintering process for obtaining the at least one semi-finished polyimide product.

12. The process according to any one of claims 1 to 11, wherein the sintering in process step b) and/or the sintering process for obtaining the at least one semi-finished polyimide product is carried out by direct forming, compression molding, isostatic pressing, hot compression molding and/or compacting.

13. The process according to any one of claims 1 to 12, wherein the process comprises a further step c) of mechanically shaping the recycled semi-finished polyimide product into a recycled polyimide article obtaining thereby leftovers of the recycled semi-finished polyimide product which are subjected into process step a).

14. Recycled semi-finished polyimide product obtainable by the process according to any one of claims 1 to 13.

15. Article comprising the recycled semi-finished polyimide product according to claim 14.
